# EUROPÄISCHE PATENTSCHRIFT

(11) **EP 2 288 639 B1**
(45) Veröffentlichungstag und Bekanntmachung des Hinweises auf die Patenterteilung: **19.02.2014**
(21) Anmeldenummer: 09761781.5
(22) Anmeldetag: 12.06.2009
(51) Int. Cl.: C08G 59/18, C08G 59/40

(54) **POLYAMIN MIT REDUZIERTEM BLUSHING UND DESSEN VERWENDUNG ALS HÄRTER FÜR EPOXIDHARZE**
POLYAMINE WITH REDUCED BLUSHING AND ITS APPLICATION AS HARDENER FOR EPOXY RESIN
POLYAMINE À FORMATION DE VOILE RÉDUITE ET SON UTILISATION EN TANT QUE DURCISSEUR POUR RÉSINE D'ÉPOXY

(30) Priorität: 13.06.2008 EP 08158213
(43) Veröffentlichungstag der Anmeldung: 02.03.2011
(73) Patentinhaber: Sika Technology AG, 6340 Baar (CH)
(72) Erfinder: BÜTIKOFER, Pierre-André, CH-8304 Wallisellen (CH)
(74) Vertreter: Günther, Michael
(86) Internationale Anmeldenummer: PCT/EP2009/057272
(87) Internationale Veröffentlichungsnummer: WO 2009/150219

(56) Entgegenhaltungen:
- EP-A- 0 567 831
- WO-A-02/062908
- JP-A- 54 070 211
- US-A- 4 980 398

## Beschreibung

### Technisches Gebiet

Die vorliegende Erfindung betrifft das Gebiet der Amine und deren Anwendung als Härter für Epoxidharze.

### Stand der Technik

Amine werden als Härter für Epoxidharze in grosser Vielfalt eingesetzt. Die meisten dieser Aminhärter enthalten vor allem primäre Aminogruppen und weisen dadurch den grossen Nachteil auf, dass sie mit Kohlendioxid-Gas aus der Luft stabile Carbonat- und Carbamatsalze bilden. Dies führt einerseits dazu, dass die Härter nicht offen an der Luft gelagert werden können, da sich sonst in den Gebinden Krusten bilden. Andererseits können die Härter auch bei ihrer Anwendung als Beschichtung - nach dem Einmischen ins Epoxidharz und während der Aushärtung - CO₂ aufnehmen, wodurch unerwünschte Effekte auftreten können, wie eine ästhetisch unbefriedigende klebrige Oberfläche mit Trübungen oder Flecken bis hin zu unvollständiger Aushärtung. Diese Effekte werden vom Fachmann als "Blushing" bezeichnet.

Um diese Nachteile zu mildern und um die Viskosität der Härter zu reduzieren, enthalten solche Aminhärter oft grössere Mengen an Benzylalkohol, was aber wiederum Nachteile mit sich bringt, da einerseits Benzylalkohol als flüchtige Substanz (VOC) gilt, wodurch solche Zusammensetzungen nicht als VOC-frei deklariert werden können, und andererseits grosse Mengen an Benzylalkohol die mechanischen Eigenschaften der ausgehärteten Epoxidharze deutlich reduzieren.

Polyamine mit sekundären Aminogruppen, welche als Härter für Epoxidharze geeignet sind, bilden zwar mit CO₂ keine stabilen Carbonate und führen deshalb im Allgemeinen nicht zu Blushing, allerdings sind diese Polyamine schwer zugänglich, bzw. ist deren Herstellung häufig sehr aufwändig.

Eine vielfach benutzte Möglichkeit, primäre Aminogruppen von Aminhärtern in sekundäre Aminogruppen überzuführen ist die Adduktierung mit Polyepoxiden. Die gebildeten Addukte weisen aber üblicherweise eine sehr hohe Viskosität auf, was oft eine Verdünnung mit Lösemitteln oder Benzylalkohol notwendig macht, um eine gute Verarbeitbarkeit zu erreichen, und somit wiederum zu VOC-enthaltenden Zusammensetzungen führt und die mit verdunstenden Lösungsmitteln einhergehende negative Beeinflussung der Mechanik und/oder Beständigkeit mit sich bringt.

### Darstellung der Erfindung

Aufgabe der vorliegenden Erfindung ist es daher, Polyamine zur Verfügung zu stellen, welche als Härter für Epoxidharze geeignet sind, wobei diese Polyamine keine oder zumindest einen deutlich reduzierten Gehalt an primären Aminogruppen und eine relativ niedrige Viskosität aufweisen.

Überraschenderweise wurde nun gefunden, dass Polyamine gemäss Anspruch 1 diese Aufgabe zu lösen vermögen. Die Polyamine lassen sich aus gut zugänglichen Rohstoffen in einer einfach durchzuführenden Reaktion herstellen. Zur Optimierung der Reaktivität und zur Verhinderung von Blushing kann es je nach Anwendung vorteilhaft sein, wenn das Polyamin keine oder nur einen geringen Gehalt an primären Aminogruppen aufweist. Dies kann in einfacher Art und Weise durch die gewählte Stöchiometrie in der Synthese erreicht werden. Die erfindungsgemässen Polyamine zeichnen sich durch eine tiefe Viskosität aus, was es ermöglicht, VOC-freie Härter, bzw. Epoxidharz-Zusammensetzungen, zu realisieren.

Weitere vorteilhafte Ausführungsformen der Erfindung sind Gegenstände von weiteren unabhängigen und abhängigen Ansprüchen.

### Wege zur Ausführung der Erfindung

In einem ersten Aspekt betrifft die vorliegende Erfindung ein Polyamin **A1** der Formel (I) oder (II).

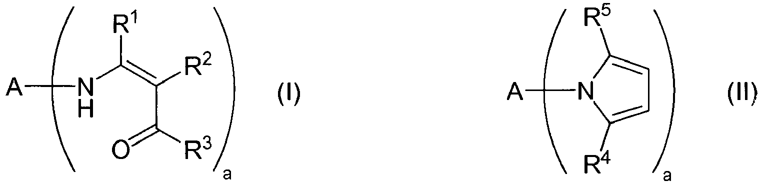

Hierbei steht a für eine ganze Zahl von 1 bis 100.

Weiterhin steht A für einen a-wertigen Rest eines Polyamins **B1** nach Entfernung von a primären Aminogruppen, wobei dieser Rest mindestens 3 Aminogruppen in Form von sekundären oder primären Aminogruppen aufweist und wobei die Anzahl dieser sekundären Aminogruppen grösser ist als die Anzahl dieser primären Aminogruppen.
Weiterhin stehen
entweder
R¹ und R³ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, und R² steht für ein Wasserstoffatom oder für eine Alkyl-, Cycloalkyl-, Aryl- oder Arylalkylgruppe mit 1 bis 12 C-Atomen,
oder
R² und R¹ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, und R³ steht für eine Alkyl-, Cycloalkyl-, Aryl- oder Arylalkylgruppe mit 1 bis 12 C-Atomen, welche gegebenenfalls Ethergruppen oder Halogenatome aufweist;
oder
R² und R³ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, und R¹ steht für eine Alkyl-, Cycloalkyl-, Aryl- oder Arylalkylgruppe mit 1 bis 12 C-Atomen, welche gegebenenfalls Ethergruppen oder Halogenatome aufweist.
Schliesslich stehen R⁴ und R⁵ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist.

Der Begriff "Polyamin" bezeichnet im vorliegenden Dokument Verbindungen mit mindestens zwei primären oder sekundären Aminogruppen.

Als "primäre" Aminogruppe wird im vorliegenden Dokument eine NH₂-Gruppe bezeichnet, die an einen organischen Rest gebunden ist, und als "sekundäre" Aminogruppe wird eine NH-Gruppe bezeichnet, die an zwei organische Reste, welche auch gemeinsam Teil eines Rings sein können, gebunden ist.

Die Acyl-Enaminogruppen der Formel (i) stehen in einem Gleichgewicht mit den tautomeren Isomeren der Formel (ii) und der Formel (iii). Bei jeder Erwähnung der Acyl-Enaminogruppen der Formel (i) sind die Tautomeren der Formel (ii) und der Formel (iii) ebenfalls gemeint, auch wenn dies jeweils nicht ausdrücklich erwähnt ist.

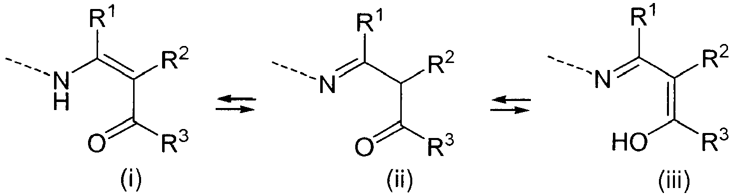

Die gestrichelten Linien in den Formeln stellen in diesem Dokument jeweils die Bindung zwischen einem Substituenten und dem zugehörigen Molekülrest dar.

Die fett markierten Bezeichnungen wie **A1, B1, B2, K1, K2, C1, C11, C2, C22** oder dergleichen im vorliegenden Dokument dienen lediglich für das bessere Leseverständnis und Identifizierung.

Bevorzugt stehen R¹ und R³ für je eine Methylgruppe.

Bevorzugt steht R² für ein Wasserstoffatom.

Bevorzugt stehen R⁴ und R⁵ für je eine Methylgruppe.

Bevorzugt steht a für eine ganze Zahl von 2 bis 100.

Bevorzugt steht a für eine ganze Zahl von 1 bis 10.

Besonders bevorzugt steht a für eine ganze Zahl von 2 bis 10.

Es ist bevorzugt, wenn a einen Wert von 2 oder grösser aufweist, weil sich derartige Polyamine **A1** der Formel (I) durch kein oder zumindest ein stark reduziertes Blushing auszeichnen.

Bevorzugt steht A für den a-wertigen Rest eines Polyamins **B1** nach Entfernung von a primären Aminogruppen, wobei das Polyamin **B1** ausgewählt ist aus der Gruppe bestehend aus Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA), N,N'-Bis(3-aminopropyl)ethylendiamin und Polyethylenimin (PEI) mit einem mittleren Molekulargewicht von 500 bis 2500 g/mol.

Besonders bevorzugt steht A für den a-wertigen Rest eines Polyamins **B1** nach Entfernung von a primären Aminogruppen, wobei das Polyamin **B1** ausgewählt ist aus der Gruppe bestehend aus Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA) und Polyethylenimin (PEI) mit einem mittleren Molekulargewicht von 500 bis 2500 g/mol.

Ein weiterer Gegenstand der Erfindung ist ein Verfahren zur Herstellung eines Polyamins **A1** der Formel (I) oder (II), wobei mindestens ein Polyamin **B1** der Formel (III) mit mindestens einem Diketon **K1** der Formel (IV) oder einem Diketon **K2** der Formel (V) umgesetzt wird, wobei das Diketon **K1** oder **K2** in Bezug auf die primären Aminogruppen des Polyamins entweder stöchiometrisch oder unterstöchiometrisch eingesetzt wird.

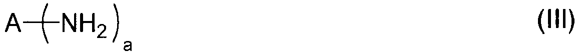

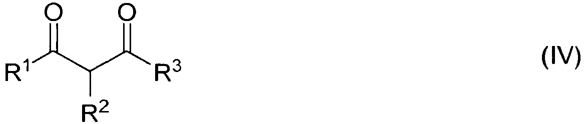

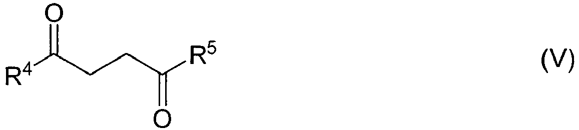

In den Formeln (III), (IV) und (V) weisen A, a, R¹, R², R³, R⁴ und R⁵ die bereits erwähnten Bedeutungen auf.

Das jeweilige Diketon reagiert unter Wasserabspaltung mit primären Aminogruppen des Polyamins **B1** der Formel (III).

Im Fall des Diketons **K1** der Formel (IV)-einem β-Diketon, auch 1,3-Diketon genannt - wird ein Polyamin **A1** der Formel (I) gebildet, wobei pro mol umgesetztes Diketon **K1** ein mol Wasser frei wird. Diese Umsetzung erfolgt sehr schnell und annähernd quantitativ. Sie wird bevorzugt bei einer Temperatur im Bereich von 20 bis 120 °C durchgeführt.

Im Fall des Diketons **K2** der Formel (V) -einem γ-Diketon, auch 1,4-Diketon genannt - wird ein Polyamin **A1** der Formel (II) gebildet, wobei pro mol umgesetztes Diketon **K2** zwei mol Wasser frei werden. Diese Reaktion ist auch bekannt unter dem Namen "Paal-Knorr-Pyrrol-Synthese". Bei der Bildung des Polyamins **A1** der Formel (II) tritt als Zwischen- (bzw. Neben-) Produkt die nichtcyclisierte Form, wie sie in der Formel (II') dargestellt ist, auf.

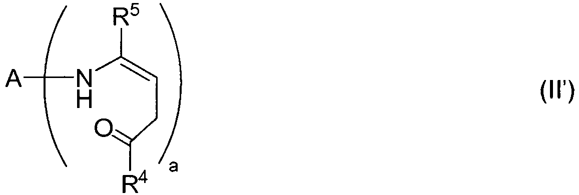

In der Formel (II') weisen R⁴, R⁵, A und a die bereits genannten Bedeutungen auf.

Die Cyclisierung zur Pyrrolgruppe (Kondensationsreaktion) erfolgt zu einem überwiegenden Teil, wenn die Reaktionsmischung beispielsweise während einiger Stunden bei erhöhter Temperatur, wie beispielsweise 60 bis 120 °C, gerührt wird.

Es ist auch möglich, ein Polyamin **A1** der Formel (I) herzustellen, indem anstelle eines Diketons **K1** der Formel (IV) ein Keton der Formel (IV a) verwendet wird. Hierbei wird mindestens ein Polyamin **B1** der Formel (III) mit mindestens einem Keton der Formel (IV a) umgesetzt, wobei das Keton der Formel (IV a) in Bezug auf die primären Aminogruppen des Polyamins entweder stöchiometrisch oder unterstöchiometrisch eingesetzt wird. In diesem Fall erfolgt die Alkylierung der primären Aminogruppen ohne Abspaltung von Wasser.

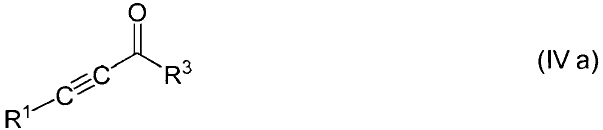

In der Formel (IV a) weisen R¹ und R³ die bereits genannten Bedeutungen auf.

Ein geeignetes Polyamin **B1** weist mindestens eine primäre Aminogruppe und zusätzlich mindestens 3 Aminogruppen in Form von primären oder sekundären Aminogruppen auf. Geeignet als Polyamin **B1** sind insbesondere die folgenden Polyamine:
- Zwei primäre und mindestens zwei sekundäre Aminogruppen aufweisende aliphatische Polyamine, beispielsweise sogenannte Polyalkylenamine wie Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA) und N,N'-Bis(3-amino-propyl)ethylendiamin. Solche Polyalkylenamine werden beispielsweise hergestellt aus 1,2-Dichlorethan und Ammoniak, oder aus der Cyanoethylierung oder Cyanobutylierung und anschliessender Hydrierung von primären Polyaminen.
- Sogenannte Polyethylenimine (PEI); dabei handelt es sich um verzweigte polymere Amine aus der Polymerisation von Ethylenimin. Ein geeignetes Polyethylenimin weist typischerweise ein mittleres Molekulargewicht im Bereich von 250 bis 25'000 g/mol auf und enthält tertiäre, sekundäre und primäre Aminogruppen. Polyethylenimine sind beispielsweise erhältlich unter dem Handelsnamen Lupasol^{®} von BASF, zum Beispiel als Lupasol^{®} FG, Lupasol^{®} G20 und Lupasol^{®} PR 8515.

Bevorzugte Polyamine **B1** sind ausgewählt aus der Gruppe bestehend aus TETA, TEPA, PEHA, HEPA, N,N'-Bis(3-aminopropyl)ethylendiamin und Polyethylenimin (PEI) mit einem mittleren Molekulargewicht von 500 bis 2500 g/mol.

Besonders bevorzugte Polyamine **B1** sind ausgewählt aus der Gruppe bestehend aus TEPA, PEHA, HEPA und Polyethylenimin (PEI) mit einem mittleren Molekulargewicht von 500 bis 2500 g/mol.

Als Diketon **K1** der Formel (IV) geeignet sind insbesondere 2,4-Pentandion (= Acetylaceton), in 3-Stellung alkyliertes 2,4-Pentandion, also insbesondere 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 1,1,1-Trifluoro-2,4-pentandion, 1,1,1,5,5,5-Hexafluoro-2,4-pentandion, 3,5-Heptandion, 3,5-Octandion, 2,4-Octandion, 6-Methyl-3,5-heptandion, 2,2,6,6-Tetramethyl-3,5-heptandion, 2,2,4,6,6-Pentamethyl-3,5-heptandion, 1-Phenyl-1,3-butandion, 2-Acetylcyclopentanon, 2-Acetylcyclohexanon, 2-Benzoyl-cyclopentanon und 2-Benzoylcyclohexanon.

Bevorzugte Diketone **K1** sind ausgewählt aus der Gruppe bestehend aus 2,4-Pentandion, 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 3,5-Heptandion, 6-Methyl-3,5-heptandion, 2,2,6,6-Tetramethyl-3,5-heptandion, 2,2,4,6,6-Pentamethyl-3,5-heptandion, 2-Acetylcyclopentanon und 2-Acetylcyclohexanon.

Besonders bevorzugt als Diketon **K1** ist 2,4-Pentandion.

Als Diketon **K2** der Formel (V) geeignet sind insbesondere 2,5-Hexandion (= Acetonylaceton), 3,4-Dimethyl-2,5-hexandion, 1,2-Dibenzoylethan, 1,4-Bis-(2-furyl)-1,4-butandion und 2-(2-Oxopropyl)-cyclopentanon. Bevorzugt als Diketon **K2** ist 2,5-Hexandion.

Ein Polyamin **A1** der Formel (I) oder (II) ist in einem einfachen Verfahren aus gut zugänglichen Rohstoffen herstellbar. Es weist mindestens 3 gegenüber Epoxidgruppen reaktive Aminogruppen auf. Die Anzahl der sekundären Aminogruppen ist grösser als die Anzahl der primären Aminogruppen. Dadurch ist das Polyamin **A1** sehr gut geeignet als Härter, insbesondere als Härter für Epoxidharze.

Das Polyamin **A1** weist weiterhin keine oder nur einen geringen Gehalt an primären Aminogruppen auf, insbesondere auch im Vergleich zum entsprechenden, dem Polyamin **A1** zugrunde liegenden Polyamin **B1.** Unter einem geringen Gehalt an primären Aminogruppen wird dabei ein hohes NH₂-Equivalentgewicht verstanden. Dadurch reagiert das Polyamin **A1** kaum bis gar nicht mit Kohlendioxid-Gas aus der Luft und bildet dadurch wenig bis keine Carbonat- und/oder Carbamatsalze. Die Abwesenheit solcher Salzbildung ist insbesondere bei einem Einsatz des Polyamins **A1** als Härter für Epoxidharze in einer Anwendung als Beschichtung sehr vorteilhaft, da es dadurch bei der Aushärtung des Epoxidharzes nicht zu salzbedingten optischen und/oder mechanischen Defekten, wie insbesondere den als Blushing bekannten Filmtrübungen, kommen kann. Andererseits weist das Polyamin **A1** mindestens drei gegenüber Epoxidgruppen reaktive Aminogruppen und somit eine Funktionalität gegenüber Epoxidgruppen von mindestens 3 auf, was für einen Härter für Epoxidharze notwendig ist, da dadurch bei der Aushärtung eine Vernetzung auftritt, während bei einer Funktionalität von 2 nur eine Kettenverlängerung und bei einer Funktionalität von 1 gar Kettenabbruch auftritt. Ein nicht der vorliegenden Erfindung entsprechendes Polyamin wäre deshalb beispielsweise das Umsetzungsprodukt aus Triethylentetramin (TETA) und einem Diketon **K1** oder **K2** im Molverhältnis 1:2. Dieses so umgesetzte Polyamin weist keine primären und nur noch zwei sekundäre Aminogruppen und somit eine Funktionalität von 2 auf und würde als Härter für Epoxidharze eine blosse Kettenverlängerung bewirken, was zu qualitativ unbefriedigenden Filmen führen würde.

Die Acyl-Enaminogruppen der Formel (i) aus der Umsetzung mit dem Diketon **K1** der Formel (IV) - beziehungsweise die Pyrrolgruppen aus der Umsetzung mit dem Diketon **K2** der Formel (V) - des Polyamins **A1** sind lager-stabil, auch in Anwesenheit von Wasser und bei erhöhter Temperatur, wie beispielsweise bei 60 °C. Mit Epoxidgruppen reagieren sie - auch in Anwesenheit von Feuchtigkeit - nicht in nennenswertem Ausmass, trotz des Enamin-Stickstoffs der Acyl-Enaminogruppe; letztere stellt eine vinyloge Amidogruppe dar, in welcher das Wasserstoffatom des Enamin-Stickstoffs eine stabile intramolekulare Wasserstoffbrücke mit dem Carbonylsauerstoff eingehen kann.

Härter für Epoxidharze nach dem Stand der Technik, welche viele primäre Aminogruppen enthalten, werden oft mit erheblichen Mengen an Verdünnungsmitteln, insbesondere Benzylalkohol, versetzt. Benzylalkohol reduziert auch das Blushing bei der Filmbildung mit Epoxidharzen. Ein hoher Gehalt an Benzylalkohol kann aber auch Probleme verursachen, beispielsweise indem die Härte des ausgehärteten Films in einem unerwünschten Mass reduziert wird. Zudem ist Benzylalkohol eine flüchtige Verbindung (VOC). Der Einsatz des Polyamins **A1** als Härter für Epoxidharze ermöglicht Zusammensetzungen, welche einen stark reduzierten Gehalt an Benzylalkohol aufweisen oder ganz frei sind von Benzylalkohol, da das Polyamin **A1** nur wenig oder keine primären Aminogruppen enthält und deshalb kaum Probleme mit Blushing auftreten, und da das Polyamin **A1** eine relativ tiefe Viskosität aufweist. Das Polyamin **A1** weist eine deutlich tiefere Viskosität auf als ein Addukt aus dem entsprechenden Polyamin **B1** und einem Polyepoxid. Insbesondere sind die Polyamine **A1** deutlich niedrigviskoser als die entsprechenden Addukte zwischen dem Polyamin **B1,** welches dem Polyamin **A1** zu Grunde liegt, und einem Bisphenol-A-Epoxidharz. Solche Addukte lassen sich lediglich unter Zusatz von Lösemittel oder Verdünnern handhaben.

Das Polyamin **A1** der Formel (I) oder (II) lässt sich verwenden als Reaktionspartner für Substanzen, welche gegenüber NH-Gruppen reaktive Gruppen aufweisen, wie beispielsweise Isocyanat-, Isothiocyanat-, Cyclocarbonat-, Epoxid-, Episulfid-, Aziridin-, Acryl-, Methacryl-, 1-Ethinylcarbonyl-, 1-Propinylcarbonyl-, Maleimid-, Citraconimid-, Vinyl-, Isopropenyl- und AllylGruppen. Vorteilhaft verwenden lässt sich das Polyamin **A1** als Härter für Substanzen, welche mindestens zwei der vorgenannten Reaktivgruppen aufweisen, insbesondere als Härter für Polyisocyanate und Polyepoxide. Speziell geeignet ist das Polyamin **A1** als Härter für Epoxidharze. Das Polyamin **A1** kann auch als Bestandteil einer Mischung, welche weitere als Härter für Epoxidharze geeignete Substanzen enthält, eingesetzt werden.

Ein weiterer Gegenstand der vorliegenden Erfindung ist eine Härter-Zusammensetzung enthaltend
(a) mindestens ein Polyamin **A1** der Formel (I) oder (II), wie es vorgängig beschrieben wurde,
(b) mindestens ein Polyamin **B2** mit mindestens zwei Aminogruppen in Form von primären oder sekundären Aminogruppen.

Als Polyamin **B2** sind insbesondere die folgenden Polyamine geeignet:
- aliphatische, cycloaliphatische oder arylaliphatische primäre Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3-und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]-decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische primäre Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxado-decan-3,10-diamin und höhere Oligomere dieser Diamine, Bis-(3-aminopropyl)polytetrahydrofurane und andere Polytetrahydrofuran-diamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-1 04, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- aliphatische, cycloaliphatische oder arylaliphatische primäre Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
- primäre Polyoxyalkylen-Triamine, welche typischerweise Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie zum Beispiel Jeffamine^{®} T-403, Jeffamine^{®} T-3000, Jeffamine^{®} T-5000; Polyetheramin T403, Polyetheramin T5000; und PC Amine^{®} TA 403, PC Amine^{®} TA 5000;
- sekundäre und primäre Aminogruppen aufweisende Polyamine, beispielswiese Diethylentriamin (DETA), Dipropylentriamin (DPTA), Bis-hexamethylentriamin (BHMT), 3-(2-Aminoethyl)aminopropylamin, N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin; sowie weiterhin die als geeignete Polyamine **B1** bereits genannten Polyamine;
- tertiäre Aminogruppen aufweisende Polyamine, wie beispielsweise N,N'-Bis-(aminopropyl)-piperazin, N,N-Bis-(3-aminopropyl)methylamin, N,N-Bis-(3-aminopropyl)ethylamin, N,N-Bis-(3-aminopropyl)propylamin N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)-dodecylamin und N,N-Bis-(3-aminopropyl)-talgalkyl-amin, erhältlich als Triameen^{®} Y12D und Triameen^{®} YT (von Akzo Nobel);
- sekundäre Aminogruppen aufweisende Polyamine, wie beispielsweise N,N'-Dibutylethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylen-dipiperidin, N-alkylierte Polyetheramine, beispielsweise die Jeffamine^{®}-Typen SD-231, SD-401, SD-404 und SD-2001 (von Huntsman);
- weiterhin sogenannte Polyamidoamine. Als Polyamidoamin wird das Reaktionsprodukt aus einer ein- oder mehrwertigen Carbonsäure, beziehungsweise deren Ester oder Anhydride, und einem aliphatischen, cycloaliphatischen oder aromatischen Polyamin bezeichnet, wobei das Polyamin im stöchiometrischen Überschuss eingesetzt wird. Als mehrwertige Carbonsäure wird üblicherweise eine sogenannte Dimerfettsäure verwendet, und als Polyamin wird üblicherweise ein Polyalkylenamin wie beispielsweise TETA verwendet. Kommerziell erhältliche Polyamidoamine sind beispielsweise Versamid^{®} 100, 125, 140 und 150 (von Cognis), Aradur^{®} 223, 250 und 848 (von Huntsman), Euretek^{®} 3607, Euretek^{®} 530 (von Huntsman), Beckopox^{®} EH 651, EH 654, EH 655, EH 661 und EH 663 (von Cytec).

Bevorzugt ist das Polyamin **B2** ausgewählt aus der Gruppe bestehend aus 1,5-Diamino-2-methylpentan (MPMD), 2-Butyl-2-ethyl-1,5-pentandiamin (C11-Neodiamin), 2,2,4- und 2,4,4-Trimethylhexamethylendiamin (TMD), Bis-(4-amino-3-methylcyclohexyl)-methan, 1-Amino-3-aminomethyl-3,5,5-trimethyl-cyclohexan (= Isophorondiamin oder IPDA), 1,3-Bis-(aminomethyl)cyclohexan, 3(4),8(9)-Bis-(aminomethyl)-tricyclo[5.2.1.0^{2,6}]decan, 1,3-Xylylendiamin, Di-ethylentriamin (DETA), Dipropylentriamin (DPTA) und ein Ethergruppenhaltiges Diamin aus der Aminierung eines Polyoxyalkylen-Diols mit einem Molekulargewicht von 500 bis 5000 g/mol, insbesondere Jeffamine^{®} D-230 und Jeffamine^{®} D-400.

Die Härter-Zusammensetzung kann weiterhin Amin/Polyepoxid-Addukte enthalten. Insbesondere lässt sich ein Polyamin **B1** oder ein Polyamin B2 teilweise mit einem Polyepoxid zu einem Addukt umsetzen, wobei die Umsetzung so geführt wird, dass die primären und sekundären Aminogruppen des Polyamins gegenüber den Epoxidgruppen des Polyepoxids im stöchiometrischen Überschuss eingesetzt werden.

Der Begriff "Polyepoxid" bezeichnet im vorliegenden Dokument Verbindungen mit mindestens zwei Epoxidgruppen. Als "Diepoxid" werden Verbindungen mit zwei Epoxidgruppen bezeichnet.

Als "Epoxidgruppe" oder "Epoxygruppe" wird im vorliegenden Dokument das Strukturelement 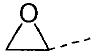 bezeichnet.

Als Polyepoxid zur Herstellung eines solchen Adduktes sind insbesondere Diepoxide geeignet, insbesondere Diglycidylether von aromatischen Diolen, wie beispielsweise Bisphenol-A-, Bisphenol-F- oder Bisphenol-A/F-Flüssigharze.

Ein Polyamin **A1** der Formel (I) oder (II), beziehungsweise eine Härter-Zusammensetzung, wie sie vorgängig beschrieben wurde, wird vorteilhaft verwendet als Bestandteil einer Epoxidharz-Zusammensetzung, wobei das Polyamin **A1** als Härter für mindestens ein Epoxidharz wirkt.

Ein weiterer Gegenstand der vorliegenden Erfindung ist deshalb eine zweikomponentige Epoxidharz-Zusammensetzung, bestehend aus einer Härter-Komponente **C1** und einer Harz-Komponente **C2.**

Die zweikomponentige Epoxidharz-Zusammensetzung kann insbesondere als Klebstoff, Abdichtungsmasse, Vergussmasse, Beschichtung, Bodenbelag, Anstrich, Lack, Primer oder Grundierung, bevorzugt als Beschichtung, insbesondere als Bodenbeschichtung, verwendet werden.

Die Härter-Komponente **C1** enthält mindestens ein Polyamin **A1** der Formel (I) oder (II), gegebenenfalls in Form einer der beschriebenen Härter-Zusammensetzungen.

Die Harz-Komponente **C2** enthält mindestens ein Epoxidharz.

Als Epoxidharz sind dabei in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.

Als Epoxidharz besonders geeignet sind sogenannte Polyepoxid-Flüssigharze, im folgenden als "Flüssigharz" bezeichnet. Diese weisen eine Glasübergangstemperatur auf, welche üblicherweise unterhalb von 25 °C liegt, im Gegensatz zu den sogenannten Festharzen, welche eine Glasübergangstemperatur oberhalb von 25 °C aufweisen und sich zu bei 25 °C schüttfähigen Pulvern zerkleinern lassen.

In einer Ausführungsform handelt es sich beim Flüssigharz um ein aromatisches Polyepoxid. Dafür geeignet sind beispielsweise Flüssigharze der Formel (VI), 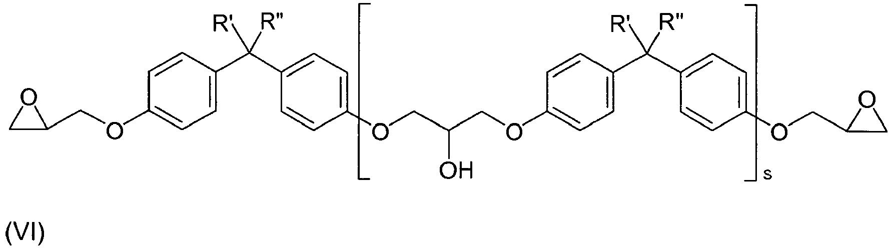 wobei R' und R" unabhängig voneinander jeweils für ein Wasserstoffatom oder für eine Methylgruppe stehen, und s im Mittel für einen Wert von 0 bis 1 steht. Bevorzugt sind solche Flüssigharze der Formel (VI),bei denen der Index s im Mittel für einen Wert von kleiner als 0.2 steht.

Bei den Flüssigharzen der Formel (VI) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Ein Bisphenol-A-Flüssigharz weist dementsprechend Methylgruppen, ein Bisphenol-F-Flüssigharz Wasserstoffatome und ein Bisphenol-A/F-Flüssigharz sowohl Methylgruppen als auch Wasserstoffatome als R' und R" in Formel (VI) auf. Im Fall von Bisphenol-F können auch Stellungsisomere vorhanden sein, insbesondere abgeleitet von 2,4'- und 2,2'-Hydroxyphenylmethan.

Weitere geeignete aromatische Flüssigharze sind die Glycidylisierungsprodukte von
- Dihydroxybenzol-Derivaten wie Resorcin, Hydrochinon und Brenzkatechin;
- weiteren Bisphenolen oder Polyphenolen wie Bis-(4-hydroxy-3-methyl-phenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M).

Als Epoxidharz eignet sich auch ein aliphatisches oder cycloaliphatisches Polyepoxid, wie beispielsweise
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol, Dibromo-neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz eignet sich auch ein Bisphenol-A-, -F- oder -A/F-Festharz, welches ähnlich aufgebaut ist wie die bereits genannten Flüssigharze der Formel (VI),aber anstelle des Index s einen Wert von 2 bis 12 aufweist, und weiterhin eine Glasübergangstemperatur oberhalb von 25 °C aufweist.

Als Epoxidharz eignen sich schliesslich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt sind Bisphenol-A-, -F- oder -A/F-Fest- oder Flüssigharze, wie sie kommerziell beispielsweise von Dow, Huntsman und Hexion erhältlich sind.

Das Epoxidharz kann einen sogenannten Reaktivverdünner enthalten. Als Reaktivverdünner geeignet sind Mono- und Polyepoxide, wie beispielsweise die Glycidylether von ein- oder mehrwertigen Phenolen und aliphatischen oder cycloaliphatischen Alkoholen, wie insbesondere die bereits genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidyl-ether oder C₁₂- bis C₁₄-Alkylglycidylether. Die Zugabe eines Reaktivverdünners zum Epoxidharz bewirkt eine Reduktion der Viskosität, sowie - im ausgehärteten Zustand der Epoxidharz-Zusammensetzung - eine Reduktion der Glasübergangstemperatur und der mechanischen Werte.

Ein Polyamin **A1** der Formel (I) oder (II) kann weiterhin mit einer "in situ-Methode" in einer zweikomponentigen Epoxidharz-Zusammensetzung erzeugt werden, wobei das dem Polyamin **A1** zugrunde liegende Polyamin **B1** erst beim Vermischen mit dem Epoxidharz mit einem Diketon **K1** der Formel (IV) oder einem Diketon **K2** der Formel (V) in Kontakt kommt. Dabei wird das entsprechende Polyamin **A1** der Formel (I) oder (II) in situ, d.h. direkt im Epoxidharz, gebildet.

Ein weiterer Gegenstand der vorliegenden Erfindung ist deshalb eine zweikomponentige Epoxidharz-Zusammensetzung, bestehend aus einer Härter-Komponente **C11** und einer Harz-Komponente **C22,** welche wie die bereits beschriebene Epoxidharz-Zusammensetzung verwendet werden kann.

Die Härter-Komponente **C11** enthält mindestens ein Polyamin **B1** der Formel (III).

Die Harz-Komponente **C22** enthält neben mindestens einem Epoxidharz, wie es vorgängig beschrieben wurde, weiterhin mindestens ein Diketon **K1** der Formel (IV) oder ein Diketon **K2** der Formel (V), wobei das Diketon in Bezug auf die primären Aminogruppen des Polyamins **B1** stöchiometrisch oder unterstöchiometrisch vorhanden ist, so dass beim Vermischen der beiden Komponenten mindestens ein Polyamin **A1** der Formel (I) oder (II) gebildet wird.

Sowohl die Härter-Komponente **C1,** beziehungsweise **C11,** als auch die Harz-Komponente **C2,** beziehungsweise **C22,** können weitere Hilfs- und Zusatzstoffe enthalten, wie beispielsweise:
- nicht-reaktive Verdünner, Lösemittel oder Filmbildehilfsmittel, wie Toluol, Xylol, Methylethylketon, 2-Ethoxyethanol, 2-Ethoxy-ethylacetat oder Benzylalkohol, Ethylenglykol, Diethylenglykolbutylether, Dipropylenglykolbutylether, Ethylenglykolbutylether, Ethylenglykolphenylether, N-Methylpyrrolidon, Propylenglykolbutylether, Propylenglykolphenylether, Bisphenole und Phenolharze, Diphenylmethan, Diisopropylnaphthalin, Erdölfraktionen wie zum Beispiel Solvesso-Typen (von Exxon), aromatische Kohlenwasserstoffharze, Sebacate, Phthalate, organische Phosphor- und Sulfonsäureester und Sulfonamide;
- Reaktivverdünner und Extender, beispielsweise Epoxidgruppen-haltige Reaktivverdünner, wie sie vorgängig bereits erwähnt wurden, epoxidiertes Sojaöl, Butyrolakton, Triphenylphosphit, sowie weiterhin Polyamide, Polymere mit Carboxylgruppen, Isocyanate, Reaktivgruppen-aufweisende Silikone, Polysulfide, Butadien-Acrylnitril-Copolymere und Polyurethane;
- Polymere, wie beispielsweise Polyamide, Polysulfide, Polyvinylformal (PVF), Polyvinylbutyral (PVB), Polyurethane (PUR), Styrol-Butadien-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluor-haltige Polymere, Sulfonamid-modifizierte Melamine;
- thermoplastische Polymere wie Polyethersulfon, Polyetherimid und Bitumen;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Dolomite, Wollastonite, Kaoline, Mica (Kalium-AluminiumSilikat), Molekularsiebe, Aluminiumoxide, Aluminiumhydroxide, Kieselsäuren, Zemente, Gipse, Flugaschen, Russ, Graphit, Metall-Pulver wie Aluminium, Kupfer, Eisen, Silber oder Stahl, PVC-Pulver oder Hohlkugeln;
- Fasern, beispielsweise aus Kunststoff oder Glas;
- Pigmente, beispielsweise Titandioxid oder Eisenoxide;
- Beschleuniger, welche die Reaktion zwischen Aminogruppen und Epoxidgruppen beschleunigen, beispielsweise Säuren oder zu Säuren hydrolysierbare Verbindungen, beispielsweise organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie beispielsweise Phosphorsäure, oder Mischungen der vorgenannten Säuren und Säureester; weiterhin tertiäre Amine wie 1,4-Diazabicyclo[2.2.2]octan, Benzyldimethylamin, α-Methylbenzyldimethylamin, 2-(Dimethylaminomethyl)-phenol oder 2,4,6-Tris-(dimethylaminomethyl)-phenol, Triethanolamin, Dimethyl-aminopropylamin, Salze solcher tertiärer Amine, quaternäre Ammoniumsalze, wie beispielsweise Benzyltrimethylammoniumchlorid, sowie Phosphite wie beispielsweise Triphenylphosphit;
- Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Haftverbesserer, beispielsweise Organoalkoxysilane wie 3-Glycidoxypropyl-trimethoxysilan, 3-Aminopropyltrimethoxysilan, N-(2-Aminoethyl)-3-amino-propyl-trimethoxysilan, N-(2-Aminoethyl)-N'-[3-(trimethoxysilyl)propyl]ethy-lendiamin, 3-Ureidopropyltrimethoxysilan, 3-Chloropropyltrimethoxysilan, Vinyltrimethoxysilan, oder die entsprechenden Organosilane mit Ethoxy- anstelle der Methoxygruppen;
- Stabilisatoren gegen Wärme, Licht und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Bevorzugt weist die Epoxidharz-Zusammensetzung weniger als 5 Gewichts-%, bevorzugt weniger als 2 Gewichts-%, an Benzylalkohol auf. Insbesondere ist die Epoxidharz-Zusammensetzung frei von Benzylalkohol.

Die Härter-Komponente **C1,** bzw. **C11,**und die Harz-Komponente **C2,** bzw. **C22,** können jeweils in einer geeigneten Verpackung oder Anordnung, wie beispielsweise einem Fass, einem Hobbock, einem Beutel, einem Eimer, einer Büchse, einer Kartusche oder einer Tube, vor ihrer Anwendung während mehreren Monaten bis zu einem Jahr und länger aufbewahrt werden,ohne dass sie sich in ihren jeweiligen Eigenschaften in einem für ihren Gebrauch relevanten Ausmass verändern.

Das Mischungsverhältnis zwischen der Härter-Komponente **C1** und der Harz-Komponente **C2** wird bevorzugt so gewählt, dass die gegenüber Epoxidgruppen reaktiven Gruppen der Härter-Komponente **C1** in einem geeigneten Verhältnis zu den Epoxidgruppen der Harz-Komponente **C2** stehen. Geeigneterweise sind vor der Aushärtung 0.7 bis 1.5, bevorzugt 0.9 bis 1.1, Equivalent gegenüber Epoxidgruppen aktive NH-Wasserstoffe pro Equivalent Epoxidgruppen vorhanden.

Das Mischungsverhältnis zwischen einer Härter-Komponente **C11** und einer Harz-Komponente **C22** wird bevorzugt so gewählt, dass die nach der Umsetzung mit dem Diketon **K1** oder **K2** übrigbleibenden, gegenüber Epoxidgruppen reaktiven Gruppen der Härter-Komponente **C11** in einem geeigneten Verhältnis zu den Epoxidgruppen der Harz-Komponente **C22** stehen. Geeigneterweise sind nach der Umsetzung mit dem Diketon **K1** oder **K2** und vor der Aushärtung 0.7 bis 1.5, bevorzugt 0.9 bis 1.1, Equivalent gegenüber Epoxidgruppen aktive NH-Wasserstoffe pro Equivalent Epoxidgruppen vorhanden.

In Gewichtsteilen liegt das Mischungsverhältnis zwischen der Härter-Komponente **C1,** bzw. **C11,**und der Harz-Komponente **C2,** bzw. **C22,** üblicherweise im Bereich von 1:10 bis 10:1.

Vor oder während der Applikation werden die beiden Komponenten mittels eines geeigneten Verfahrens miteinander vermischt. Das Mischen kann kontinuierlich oder batchweise erfolgen. Falls das Vermischen vor der Applikation erfolgt, muss darauf geachtet werden, dass zwischen dem Vermischen der Komponenten und der Applikation nicht zuviel Zeit vergeht, da es dadurch zu Störungen, wie beispielsweise einem verlangsamten oder unvollständigen Aufbau der Haftung zum Substrat, kommen kann.

Mit dem Mischen beginnt die Aushärtungsreaktion. Die in der Epoxidharz-Zusammensetzung vorhandenen, gegenüber Epoxidgruppen reaktiven NH-Wasserstoffe reagieren mit vorhandenen Epoxidgruppen, wodurch die Zusammensetzung schliesslich aushärtet. Somit beschreibt die vorliegende Erfindung auch eine ausgehärtete Zusammensetzung, welche durch ein Mischen der Komponenten **C1** und **C2,** bzw. **C11** und **C22,** einer zweikomponentigen Epoxidharz-Zusammensetzung, wie sie vorgängig beschrieben wurde, erhalten wird.

Die Applikation und die Aushärtung erfolgen vorteilhaft bei Temperaturen im Bereich von 5 bis 50 °C.

Die Aushärtungsgeschwindigkeit ist abhängig von der Umgebungstemperatur und von gegebenenfalls vorhandenen Beschleunigern.

Bei der Aushärtung der beschriebenen Epoxidharz-Zusammensetzung entstehen typischerweise ästhetisch schöne Filme, während Zusammensetzungen, welche anstelle des Polyamins **A1** das entsprechende Polyamin **B1** als Härter enthalten, zu Blushing-Effekten wie Trübungen und Klebrigkeit neigen. Typischerweise ist der ausgehärtete Film der beschriebenen Epoxidharz-Zusammensetzung klar und glänzend bis zuweilen leicht opak, und weitgehend klebfrei.

Die Epoxidharz-Zusammensetzung kann verwendet werden als Klebstoff, Abdichtungsmasse, Vergussmasse, Beschichtung, Bodenbelag, Anstrich, Lack, Primer oder Grundierung, wobei Eigenschaften wie Wasserdichtigkeit, Korrosionsschutz, Chemikalienbeständigkeit und/oder hohe Härte und Zähigkeit im Vordergrund stehen können. Ihre Verwendung kann beispielsweise im Hoch- oder Tiefbau, in der Fertigung oder Reparatur von industriellen Gütern oder Konsumgütern erfolgen.

Die Epoxidharz-Zusammensetzung neigt wesentlich weniger zu Störungen der Oberfläche bei der Aushärtung, wie dem sogenannten Blushing. Probleme mit Blushing treten vor allem dann auf, wenn eine flächig applizierte Epoxidharz-Zusammensetzung bei hoher Feuchtigkeit aushärtet. Im Wasser gelöstes CO₂ kann mit primären Aminogruppen aus der Härter-Komponente zu Carbonat- oder Carbamat-Salzen reagieren, was einerseits die Stöchiometrie der Aushärtungsreaktion verändert und somit ein unvollständiges Umsetzen der Epoxidgruppen zur Folge hat, was zu einer klebrigen Oberfläche führt. Andererseits migrieren die gebildeten Salze an die Oberfläche und verursachen dort unschöne Flecken und Schleier. Die im vorliegenden Dokument beschriebene Epoxidharz-Zusammensetzung enthaltend mindestens ein Polyamin **A1** der Formel (I) oder (II) weist keine oder nur eine geringe Anzahl an primären Aminogruppen auf. Dadurch reagiert sie kaum bis gar nicht mit CO₂ und bildet dadurch wenig bis keine Carbonat- und/oder Carbamatsalze. Sie härtet deshalb auch unter feuchten Bedingungen zu flächigen Filmen mit einer klaren, glänzenden bis leicht opaken Oberfläche, weitgehend ohne sogenanntes Blushing, also ohne Flecken- oder Schleierbildung auf der Oberfläche, und ohne mechanische Defekte infolge unvollständigem Umsatz der Epoxidgruppen. Es ist deshalb möglich, weitgehend oder ganz auf den Zusatz von Benzylalkohol zur beschriebenen Epoxidharz-Zusammensetzung zu verzichten. Dadurch sind Epoxidharz-Zusammensetzungen erhältlich, welche nur einen geringen Gehalt an flüchtigen Verbindungen (VOC) aufweisen, oder VOC-frei sind.

Es hat sich somit gezeigt, dass das vorgängig beschriebene Polyamin **A1,** gegebenenfalls in Form einer Härter-Zusammensetzung, zur Reduzierung des Blushings einer Epoxidharz-Zusammensetzung verwendet werden kann. Hierdurch eignen sich diese Epoxidharz-Zusammensetzungen bestens für ästhetisch anspruchsvolle Anwendungen, wie beispielsweise als Beschichtungen, vor allem als Bodenbeläge.

Die Applikation der beschriebenen Epoxidharz-Zusammensetzung erfolgt auf mindestens ein Substrat, wobei als Substrat die Folgenden geeignet sind:
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites;
- Kunststoffe wie Polyvinylchlorid (Hart- und Weich-PVC), Acrylonitril-Butadien-Styrol-Copolymere (ABS), SMC (Sheet Moulding Compounds), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten oder dergleichen, wobei dabei entstehende Stäube vorteilhaft abgesaugt werden, sowie weiterhin Behandeln mit Reinigern oder Lösemitteln oder das Aufbringen eines Haftvermittlers, einer Haftvermittlerlösung oder eines Primers.

### Beispiele

### 1. Beschreibung der Messmethoden

Die **Viskosität** wurde auf einem Kegel-Platten-Viskosimeter Rheotec RC30 (Kegeldurchmesser 25 mm, Kegelwinkel 1°, Kegelspitze-PlattenAbstand 0.05 mm, Scherrate 50 s⁻¹) gemessen. Die bei 20°C gemessene Viskosität wurde als "η_{20°C}" in Tabelle 1 angegeben.

### 2. verwendete Rohmaterialien

| | |
|---|---|
| Pentaethylenhexamin (Delamine) ("*PEHA*") | technisch, Molekulargewicht ca. 232 g/mol, Aminzahl ca. 1220 mg KOH/g |
| Tetraethylenpentamin (Delamine) ("*TEPA*") | technisch, Molekulargewicht ca. 189 g/mol, Aminzahl ca. 1350 mg KOH/g |
| N4-Amin (BASF) | N,N'-Bis(3-aminopropyl)ethylendiamin, Molekulargewicht = 174 g/mol |
| Lupasol^{®} FG (BASF) ("*PEI*") | Polyethylenimin, mittleres Molekulargewicht 800 g/mol, Verh. primäre/ sekundäre/ tertiäre Aminogruppen ca. 1 / 0.9 / 0.5 |
| 2,4-Pentandion (Wacker) | Molekulargewicht = 100 g/mol |
| 2,5-Hexandion (Wacker) | Molekulargewicht = 114 g/mol |

### 2. Herstellung von Polyaminen vom Typ Polyamin A1

### Beispiel 1

232 g Pentaethylenhexamin wurde bei einer Temperatur von 50 °C unter Stickstoffatmosphäre vorgelegt. Unter gutem Rühren wurden langsam 200 g 2,4-Pentandion zugetropft. Anschliessend wurde während einer Stunde am Rotationsverdampfer bei 80 °C unter Vakuum das entstandene Wasser abgezogen.

### Beispiele 2 bis 13

Die Beispiele **2** bis **13** wurden analog dem Beispiel **1** hergestellt, wobei die Inhaltsstoffe gemäss den Angaben von Tabelle 1 verwendet wurden. Die Mengen sind in Gramm angegeben. Die Beispiele **4, 5, 6, 12** und **13,** bei welchen anstelle von 2,4-Pentandion 2,5 Hexandion verwendet wurde, wurden jeweils zwei Stunden anstelle von einer Stunde bei 80 °C unter Vakuum am Rotationsverdampfer belassen.

Alle Härter vom Typ Polyamin **A1** der Beispiele **1** bis **13** sind klare Flüssigkeiten von einer gelben, gelbgrünen oder orangen Farbe. In der Tabelle 1 ist als **Aspekt** jeweils der Farbton der Flüssigkeit angegeben, wobei "g" für gelb, "gg" für gelbgrün, "o" für orange und "ho" für hellorange steht. Die in der Tabelle 1 angegebenen NH-Equivalentgewichte sind berechnet.

**Tabelle 1: Zusammensetzung und Eigenschaften der Beispiele 1 bis 13.**

| **Beispiel** | **1** | **2** | **3** | **4** | **5** | **6** | **7** | **8** | **9** | **10** | **11** | **12** | **13** |
|---|---|---|---|---|---|---|---|---|---|---|---|---|---|
| *PEHA* | 232 | 232 | 232 | 232 | 232 | 232 | - | - | - | - | - | - | - |
| *TEPA* | - | - | - | - | - | - | 189 | - | - | - | - | - | - |
| N4-Amin | - | - | - | - | - | - | - | 174 | 174 | - | - | - | - |
| *PEI* | - | - | - | - | - | - | - | - | - | 300 | 800 | 800 | 800 |
| 2,4-Pentandion | 200 | 140 | 115.5 | - | - | - | 140 | 140 | 100 | 500 | 400 | - | - |
| 2,5-Hexandion | - | - | - | 228 | 160 | 132.8 | - | - | - | - | - | 570 | 456 |
| (C_{DK} / C_{NH2})^{a} | 1 | 0.7 | 0.6 | 1 | 0.7 | 0.6 | 0.7 | 0.7 | 0.5 | 0.7 | 0.5 | 0.7 | 0.5 |
| Aspekt | g | g | g | o | ho | g | g | gg | gg | g | g | ho | g |
| η_{20°C} [Pa·s] | 7.2 | 2 | 1 | 12 | 5 | 2 | 2 | 0.5 | 0.4 | 42 | 24.5 | 52 | 25 |
| NH-Eq [g/Eq] | 99 | 66.7 | 57.6 | 97 | 65.6 | 56.8 | 72.3 | 90.3 | 64 | 103 | 82 | 101 | 80.9 |

| | | | | | | | | | | | | | |
|---|---|---|---|---|---|---|---|---|---|---|---|---|---|
| ^{a} Verhältnis von Anzahl Diketon (C_{DK}) zu Anzahl primäre Aminogruppen (C_{NH2}). | | | | | | | | | | | | | |

### 4. Herstellung von Epoxidharz-Zusammensetzungen

### Beispiele 14 bis 26 und Beispiele 27 bis 30 (Vergleich)

50 Gewichtsteile einer Mischung aus 42 Gewichtsteilen Araldite^{®} GY 250 (Bisphenol-A-Diglycidylether von Huntsman, EEW = 187.5 g/Eq) und 8 Gewichtsteilen Araldite^{®} DY-E (Monoglycidylether eines C₁₂- bis C₁₄-Alkohols, von Huntsman, EEW = 290 g/Eq) wurden jeweils mit der in der Tabelle 2 angegebenen Menge (in Gewichtsteilen) des angegebenen Härters vermischt. Mit der vermischten Zusammensetzung wurde ein Film in einer Schichtdicke von 500 µm auf eine Glasplatte aufgezogen und dieser während 7 Tagen bei 23 °C und 50 % relativer Feuchtigkeit gelagert, beziehungsweise ausgehärtet. Anschliessend wurde der **Aspekt** der Filme beurteilt. Als "fehlerfrei" wurde ein Film bezeichnet, welcher klar war und eine harte, glänzende und klebfreie Oberfläche ohne Struktur aufwies. Weiterhin wurde die **Bleistifthärte** (Ritzhärte nach Wolff-Wilborn, gemessen nach ISO 15184) der Filme bestimmt. Nach einer Lagerung von 6 Monaten bei 23 °C und 50 % relativer Feuchtigkeit wurde von Filmen, welche nicht klebrig waren, die **Pendelhärte nach König** nach DIN EN ISO 1522 bestimmt und in den Tabellen als "Königshärte" bezeichnet.

Die Resultate sind in der Tabelle 2 angegeben.

**Tabelle 2: Zusammensetzung und Eigenschaften der Beispiele 14 bis 26 und der Vergleichsbeispiele 27 bis 30.**

| **Beispiel** | **Härter,** | **Menge** | **Aspekt** | **Bleistifthärte** | **Königshärte** |
|---|---|---|---|---|---|
| **14** | Beispiel **1,** | 24.9 | fast fehlerfrei (ganz leicht opak) | 4H..5H | 165 s |
| **15** | Beispiel **2**, | 16.8 | fast fehlerfrei (ganz leicht opak) * | 4H..5H | |
| **16** | Beispiel **3**, | 14.5 | fast fehlerfrei (ganz leicht opak) * | 3H..4H | |
| **17** | Beispiel **4,** | 24.4 | fehlerfrei | 4H..5H | 220 s |
| **18** | Beispiel **5,** | 16.5 | fehlerfrei | 4H..5H | 200 s |
| **19** | Beispiel **6,** | 14.3 | leicht opak, klebrig * | 3H..4H | |
| **20** | Beispiel **7,** | 18.2 | leicht opak, leicht klebrig * | 3H..4H | |
| **21** | Beispiel **8**, | 22.7 | fast fehlerfrei (ganz leicht opak) * | 2H..3H | |
| **22** | Beispiel **9,** | 16.1 | leicht opak, leicht klebrig * | H..2H | |
| **23** | Beispiel **10,** | 25.9 | fast fehlerfrei (leichte Struktur) | 6H..7H | 170 s |
| **24** | Beispiel **11,** | 20.6 | fast fehlerfrei (leichte Struktur) | 6H..7H | 180 s |
| **25** | Beispiel **12,** | 25.4 | fehlerfrei | 7H..8H | 220 s |
| **26** | Beispiel **13,** | 20.4 | fast fehlerfrei (ganz leicht opak) | 6H..7H | 165 s |
| **27 (Vgl.)** | *PEHA*, | 7.3 | matt, starke Struktur, leicht klebrig * | 4H..5H | |
| **28 (Vgl.)** | *TEPA*, | 6.8 | matt, starke Struktur, leicht klebrig * | 3H..4H | |
| **29 (Vgl.)** | N4-Amin, | 7.3 | matt, starke Struktur, klebrig * | HB..H | |
| **30 (Vgl.)** | Lupasol FG, | 9.2 | matt, starke Struktur, klebrig * | <HB | |

| | | | | | |
|---|---|---|---|---|---|
| * Nach 2 Monaten hat sich ein schmieriger Belag auf der Oberfläche gebildet. | | | | | |

Aus der Tabelle 2 ist ersichtlich, dass die erfindungsgemässen Beispiele **14** bis **26,** welche als Härter Polyamine enthalten, die in unterschiedlichen Verhältnissen mit Diketon umgesetzt sind, deutlich weniger Blushing aufweisen als die Vergleichsbeispiele **27** bis **30** mit den entsprechenden, nicht mit Diketon umgesetzten Polyaminen. Weiterhin ist ersichtlich, dass das Beispiel **14** im Vergleich zu den Beispielen **15** und **16** einen schöneren Film ergab. Der im Beispiel **14** enthaltene Härter ist weitgehend frei von primären Aminogruppen, während die in den Beispielen **15** und **16** enthaltenen Härter unterstöchiometrisch mit 2,4-Pentandion bezogen auf die primären Aminogruppen umgesetzt sind und somit noch primäre Aminogruppen enthalten. Auch die Beispiele **19** bis **22,** welche zwar Filme mit deutlich reduziertem Blushing ergaben, die nach einer Lagerzeit von 2 Monaten aber einen Belag auf der Oberfläche aufwiesen, enthalten Härter mit einem unterstöchiometrischen Umsetzungsgrad des Diketons bezogen auf die primären Aminogruppen.

### 5. Herstellung von Epoxidharz-Zusammensetzungen mit "in situ-Methode"

### Beispiele 31 bis 42 und Vergleichsbeispiele 43 und 44

Die in der Tabelle 3 angegebenen Mengen (in Gewichtsteilen) der angegebenen Substanzen wurden jeweils zu einer Härter- beziehungsweise einer Harz-Komponente vermischt und die beiden Komponenten anschliessend miteinander vermischt. Mit der vermischten Zusammensetzung wurde ein Film in einer Schichtdicke von 500 µm auf eine Glasplatte aufgezogen und dessen Aspekt wie in Beispiel **14** beschrieben beurteilt. Die **Pendelhärte nach König** wurde nach 28 Tagen Lagerung bei 23 °C und 50 % relativer Feuchtigkeit auf dieselbe Weise wie in Beispiel **14** beschrieben bestimmt.

In der Tabelle 3 stehen:

| | |
|---|---|
| *"D-230"* | für Jeffamine^{®} D-230 (Polyoxypropylen-Diamin mit einem mittleren Molekulargewicht von ca. 240 g/mol, von Huntsman), |
| *"IPDA"* | für Isophorondiamin (Molekulargewicht = 170 g/mol), |
| *"GY-250"* | für Araldite^{®} GY 250 (Bisphenol-A-Diglycidylether, von Huntsman, EEW = 187.5 g/Eq), |
| *"DY-E"* | für Araldite^{®} DY-E (Monoglycidylether eines C₁₂- bis C₁₄-Alkohols, von Huntsman, EEW = 290 g/Eq),. |
| *"TEPA-Addukt"* | für das Addukt aus 37.58 Gewichtsteilen TEPA und 12.43 Gewichtsteilen Araldite^{®} GY 250, welches theoretisch einen Gehalt an primären Aminogruppen von 150.9 g/Eq und ein NH-Equivalentgewicht von 37.7 g aufweist, |
| *"PEHA-Addukt"* | für das Addukt aus 39.39 Gewichtsteilen PEHA und 10.61 Gewichtsteilen Araldite^{®} GY 250, welches theoretisch einen Gehalt an primären Aminogruppen von 176.7 g/Eq und ein NH-Equivalentgewicht von 38.4 g aufweist, und |
| *"DETA"* | für Diethylentriamin. |

**Tabelle 3: Zusammensetzung der Beispiele 31 bis 42 und Vergleichsbeispiele 43 und 44. "Vgl." steht für "Vergleich".**

| **Beispiel** | **31** | **32** | **33** | **34** | **35** | **36** | **37** | **38** | **39** | **40** | **41** | **42** | **43 (Vgl.)** | **44 (Vgl.)** |
|---|---|---|---|---|---|---|---|---|---|---|---|---|---|---|
| Härter-Komponente: | | | | | | | | | | | | | | |
| *PEHA* | 14.6 | 14.6 | - | - | 7.3 | 13.1 | 13.1 | 11.7 | - | - | - | - | - | - |
| *PEI* | - | - | 17.1 | 17.1 | 3.5 | - | - | - | 12.8 | 12.8 | - | - | - | - |
| *D230* | - | - | - | - | - | - | - | 3.0 | 3.8 | - | - | - | - | - |
| *IPDA* | - | - | - | - | - | 1.1 | - | - | - | 2.7 | - | - | - | - |
| *MXDA* | - | - | - | - | - | - | 0.9 | - | | - | - | - | - | - |
| *TEPA-4ddukt* | - | - | - | - | - | - | - | - | - | - | - | 19.0 | 9.5 | - |
| *PEHA-Addukt* | - | - | - | - | - | - | - | - | - | - | 17.1 | - | - | - |
| *DETA* | - | - | - | - | - | - | - | - | - | - | - | - | - | 8.6 |

| Harz-Komponente: | | | | | | | | | | | | | | |
|---|---|---|---|---|---|---|---|---|---|---|---|---|---|---|
| *GY-250* | 42.0 | 42.0 | 42.0 | 42.0 | 42.0 | 42.0 | 42.0 | 42.0 | 42.0 | 42.0 | 42.0 | 42.0 | 42.0 | 42.0 |
| *DY-E* | 8.0 | 3.0 | 8.0 | 8.0 | 8.0 | 3.0 | 8.0 | 8.0 | 8.0 | 8.0 | 3.0 | 8.0 | 8.0 | 8.0 |
| 2,4-Pentandion | 12.6 | - | 10.7 | - | 11.6 | 11.3 | 11.3 | 10.1 | 8.0 | 8.0 | 9.7 | 12.6 | - | 8.4 |
| 2,5-Hexandion | - | 14.3 | - | 12.2 | - | - | - | - | - | - | - | - | - | - |

Die Resultate sind in der Tabelle 4 angegeben

**Tabelle 4: Eigenschaften der Beispiele 31 bis 42 und der Vergleichsbeispiele 43 und 44. "n.b." steht für "nicht bestimmt" (zu klebrig)."Vgl." steht für "Vergleich".**

| **Beispiel** | **Aspekt** | **Königshärte** |
|---|---|---|
| **31** | fehlerfrei | 178 s |
| **32** | klar, glänzende und klebfreie Oberfläche mit Struktur (Orangenhaut) | 170 s |
| **33** | fehlerfrei | 185 s |
| **34** | fehlerfrei | 200 s |
| **35** | fehlerfrei | 180 s |
| **36** | fast fehlerfrei (feinzellige Zeichnung auf Oberfläche) | 179 s |
| **37** | fast fehlerfrei (feinzellige Zeichnung auf Oberfläche) | 175 s |
| **38** | fast fehlerfrei (feinzellige Zeichnung auf Oberfläche) | 179 s |
| **39** | fast fehlerfrei (leichte Schlieren auf Oberfläche) | 170 s |
| **40** | fehlerfrei | 195 s |
| **41** | fast fehlerfrei (feinzellige Zeichnung auf Oberfläche) | 189 s |
| **42** | fast fehlerfrei (ganz feine Struktur auf Oberfläche) | 192 s |
| **43 (Vgl.)** | trüb, matt, starke Struktur, klebrig | n.b. |
| **44 (Vgl.)** | wolkig trüb, feine Bläschen | 93 s |

Aus den Beispielen **31** bis **42** ist ersichtlich,dass mit der "in situ-Methode" Filme mit deutlich reduziertem Blushing gegenüber den Vergleichsbeispielen **27** bis **30** und **43** entstehen. Die Beispiele **31** bis **34** entsprechen den Beispielen **14,17,23** und **25,** aber mit der "in situ-Methode". Offensichtlich bildete sich beim Vermischen mit dem PEHA bzw. dem PEI bevorzugt das entsprechende Polyamin **A1,** bevor die primären Aminogruppen mit Epoxidgruppen in nennenswertem Ausmass reagierten, denn die Filme zeigen ähnlich gute Aspekte wie die entsprechenden Beispiele **14,17,23** und **25,** teilweise sind sie sogar etwas schöner. Die Beispiele **36** bis **42** zeigen, dass die "in situ-Methode" auch mit Härter-Zusammensetzungen, in welchen Mischungen von Polyaminen **B1** und **B2,** bzw. Mischungen von Polyaminen **B1** und Addukten von Polyaminen **B1** mit Epoxyharzen, vorliegen, gute Filme ergibt. In Vergleichsbeispiel **44** wurde DETA im Molverhältnis 1:1 in situ mit Diketon umgesetzt. Dieses Polyamin weist neben einer Acyl-Enaminogruppe nur eine sekundäre und eine primäre Aminogruppe auf. Die Konzentration an primären Aminogruppen im Härter ist also relativ hoch. Dementsprechend bildete sich ein trüber, relativ weicher Film mit deutlichem Blushing.

## Patentansprüche

1. Polyamin **A1** der Formel (I) oder (II) 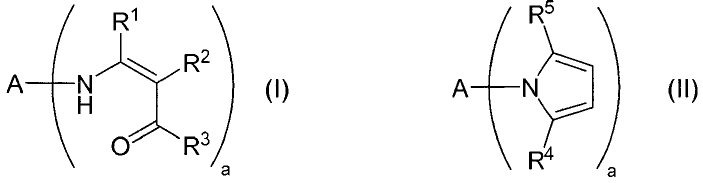 wobei
a für eine ganze Zahl von 1 bis 100 steht;
A für einen a-wertigen Rest eines Polyamins **B1** nach Entfernung von a primären Aminogruppen steht, wobei dieser Rest mindestens 3 Aminogruppen in Form von sekundären oder primären Aminogruppen aufweist und die Anzahl dieser sekundären Aminogruppen grösser ist als die Anzahl dieser primären Aminogruppen;
entweder
R¹ und R³ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen, und R² für ein Wasserstoffatom oder für eine Alkyl-, Cycloalkyl-, Aryl- oder Arylalkylgruppe mit 1 bis 12 C-Atomen steht,
oder
R² und R¹ zusammen für einen zweiwertigen Kohlenwasserstoffrest, der Teil eines, gegebenenfalls substituierten, carbocylischen Rings mit 5 bis 8 C-Atomen ist, stehen und R³ für eine Alkyl-, Cycloalkyl-, Aryl- oder Arylalkylgruppe mit 1 bis 12 C-Atomen, welche gegebenenfalls Ethergruppen oder Halogenatome aufweist, steht;
oder
R² und R³ zusammen für einen zweiwertigen Kohlenwasserstoffrest, der Teil eines, gegebenenfalls substituierten, carbocylischen Rings mit 5 bis 8 C-Atomen ist, stehen und R¹ für eine Alkyl-, Cycloalkyl-, Aryl- oder Arylalkylgruppe mit 1 bis 12 C-Atomen, welche gegebenenfalls Ethergruppen oder Halogenatome aufweist, steht; und
R⁴ und R⁵ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen.

2. Polyamin **A1** gemäss Anspruch 1, **dadurch gekennzeichnet, dass** der Index a in den Formeln (I) und (II) für 2 bis 100 steht.

3. Polyamin **A1** gemäss Anspruch 1 oder 2, **dadurch gekennzeichnet, dass** das Polyamin **B1** ausgewählt ist aus der Gruppe bestehend aus Tetraethylenpentamin (TEPA), Pentaethylenhexamin (PEHA) und Polyethylenpolyamin mit 5 bis 7 Ethylenamin-Einheiten (sogenanntes "higher ethylenepolyamine", HEPA).

4. Polyamin **A1** gemäss einem der vorhergehenden Ansprüche, **dadurch gekennzeichnet, dass** R¹ und R³ für je eine Methylgruppe stehen und/oder R² für ein Wasserstoffatom steht.

5. Verfahren zur Herstellung eines Polyamins **A1** der Formel (I) oder (II) gemäss einem der Ansprüche 1 bis 4, **dadurch gekennzeichnet, dass** mindestens ein Polyamin **B1** der Formel (III) mit mindestens einem Diketon **K1** der Formel (IV) oder einem Diketon **K2** der Formel (V) umgesetzt wird, wobei das Diketon **K1** oder **K2** in Bezug auf die primären Aminogruppen des Polyamins entweder stöchiometrisch oder unterstöchiometrisch eingesetzt wird.

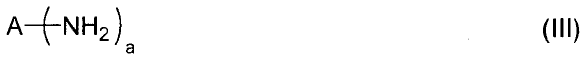

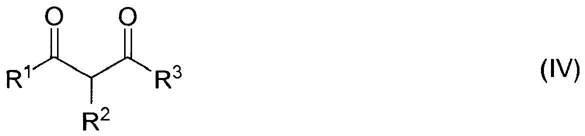

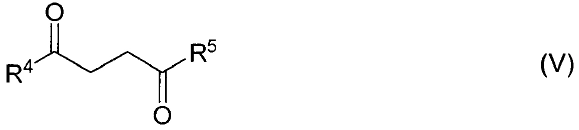

6. Verfahren gemäss Anspruch 5, **dadurch gekennzeichnet, dass** das Diketon **K1** ausgewählt aus der Gruppe bestehend aus 2,4-Pentandion, 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 3,5-Heptandion, 6-Methyl-3,5-heptandion, 2,2,6,6-Tetramethyl-3,5-heptandion, 2,2,4,6,6-Pentamethyl-3,5-heptandion, 2-Acetylcyclopentanon und 2-Acetylcyclohexanon ist und bevorzugt 2,4-Pentandion ist.

7. Verfahren zur Herstellung eines Polyamins **A1** der Formel (I) gemäss einem der Ansprüche 1 bis 4, **dadurch gekennzeichnet, dass** mindestens ein Polyamin **B1** der Formel (III) mit mindestens einem Keton der Formel (IV a) umgesetzt wird, wobei das Keton der Formel (IV a) in Bezug auf die primären Aminogruppen des Polyamins entweder stöchiometrisch oder unterstöchiometrisch eingesetzt wird.

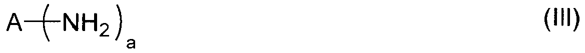

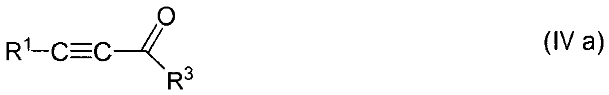

8. Verfahren gemäss Anspruch 5 oder 6 oder 7, **dadurch gekennzeichnet, dass** das Polyamin **B1** ausgewählt ist aus der Gruppe bestehend aus Tetraethylenpentamin (TEPA), Pentaethylenhexamin (PEHA) und Polyethylenpolyamin mit 5 bis 7 Ethylenamin-Einheiten (sogenanntes "higher ethylenepolyamine", HEPA).

9. Härter-Zusammensetzung enthaltend
(a) mindestens ein Polyamin **A1** der Formel (I) oder (II) gemäss einem der Ansprüche 1 bis 4,
(b) mindestens ein Polyamin **B2** mit mindestens zwei Aminogruppen in Form von primären oder sekundären Aminogruppen.

10. Härter-Zusammensetzung gemäss Anspruch 9, **dadurch gekennzeichnet, dass** das Polyamin **B2** ausgewählt ist aus der Gruppe bestehend aus 1,5-Diamino-2-methylpentan (MPMD), 2-Butyl-2-ethyl-1,5-pentandiamin (C11-Neodiamin), 2,2,4- und 2,4,4-Trimethylhexamethylendiamin (TMD), Bis-(4-amino-3-methylcyclohexyl)-methan, 1-Amino-3-aminomethyl-3,5,5-trimethylcyclohexan (= Isophorondiamin oder IPDA), 1,3-Bis-(amino-methyl)cyclohexan, 3(4),8(9)-Bis-(aminomethyl)-tricyclo[5.2.1.0^{2,6}]decan, 1,3-Xylylendiamin, Diethylentriamin (DETA), Dipropylentriamin (DPTA) und ein Ethergruppen-haltiges Diamin aus der Aminierung eines Polyoxy-alkylen-Diols mit einem Molekulargewicht von 500 bis 5000 g/mol.

11. Zweikomponentige Epoxidharz-Zusammensetzung, bestehend aus einer Härter-Komponente **C1** und einer Harz-Komponente **C2**, **dadurch gekennzeichnet,**
**dass** die Härter-Komponente **C1** mindestens ein Polyamin **A1** der Formel (I) oder (II) gemäss einem der Ansprüche 1 bis 4, gegebenenfalls in Form einer Härter-Zusammensetzung gemäss Anspruch 9 oder 10, enthält;
und **dass** die Harz-Komponente **C2** mindestens ein Epoxidharz enthält.

12. Zweikomponentige Epoxidharz-Zusammensetzung gemäss Anspruch 11, **dadurch gekennzeichnet, dass** die Zusammensetzung weniger als 5 Gewichts-% an Benzylalkohol aufweist, und insbesondere frei von Benzylalkohol ist.

13. Ausgehärtete Zusammensetzung, welche durch Mischen der zwei Komponenten **C1** und **C2** einer zweikomponentigen Epoxidharz-Zusammensetzung gemäss Anspruch 11 oder 12 erhalten wird.

14. Verwendung einer zweikomponentigen Epoxidharz-Zusammensetzung gemäss Anspruch 11 oder 12 als Klebstoff, Abdichtungsmasse, Vergussmasse, Beschichtung, Bodenbelag, Anstrich, Lack, Primer oder Grundierung, bevorzugt als Beschichtung, insbesondere als Bodenbeschichtung.

15. Verwendung eines Polyamins **A1** gemäss einem der Ansprüche 1 bis 4, oder einer Härter-Zusammensetzung gemäss Anspruch 9 oder 10, zur Reduzierung des Blushings einer Epoxidharz-Zusammensetzung.

## Claims

1. Polyamine **A1** of the formula (I) or (II) 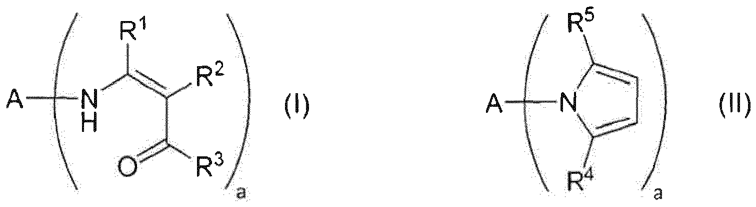 wherein
a stands for an integer from 1 to 100;
A stands for an a-valent radical of a polyamine **B1** after removal of a primary amino groups, wherein said radical has at least 3 amino groups that are secondary or primary amino groups and the number of said secondary amino groups is greater than the number of said primary amino groups;
either
R¹ and R³ each independently stand for an alkyl, cycloalkyl, aryl, or arylalkyl group with 1 to 12 C atoms, which optionally has ether groups or halogen atoms, and R² stands for a hydrogen atom or for an alkyl, cycloalkyl, aryl, or arylalkyl group with 1 to 12 C atoms,
or
R² and R¹ together stand for a divalent hydrocarbon radical that is part of an optionally substituted carbocyclic ring with 5 to 8 C atoms, and R³ stands for an alkyl, cycloalkyl, aryl, or arylalkyl group with 1 to 12 C atoms which optionally has ether groups or halogen atoms;
or
R² and R³ together stand for a divalent hydrocarbon radical that is part of an optionally substituted carbocyclic ring with 5 to 8 C atoms, and R¹ stands for an alkyl, cycloalkyl, aryl, or arylalkyl group with 1 to 12 C atoms which optionally has ether groups or halogen atoms; and
R⁴ and R⁵ each independently stand for an alkyl, cycloalkyl, aryl, or arylalkyl group with 1 to 12 C atoms which optionally has ether groups or halogen atoms.

2. Polyamine **A1** according to claim 1, **characterised in that** the index a in the formulas (I) and (II) stands for 2 to 100.

3. Polyamine **A1** according to either claim 1 or claim 2, **characterised in that** the polyamine **B1** is selected from the group consisting of tetraethylenepentamine (TEPA), pentaethylenehexamine (PEHA) and polyethylene polyamine with 5 to 7 ethyleneamine units (known as "higher ethylene polyamine", HEPA).

4. Polyamine **A1** according to any of the preceding claims, **characterised in that** R¹ and R³ each stand for a methyl group and/or R² stands for a hydrogen atom.

5. Method for preparing a polyamine **A1** of the formula (I) or (II) according to any of claims 1 to 4, **characterised in that** at least one polyamine **B1** of the formula (III) is reacted with at least a diketone **K1** of the formula (IV) or a diketone **K2** of the formula (V), the diketone **K1** or **K2** being used in either stoichiometric or substoichiometric ratio relative to the primary amino groups of the polyamine.

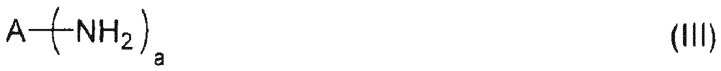

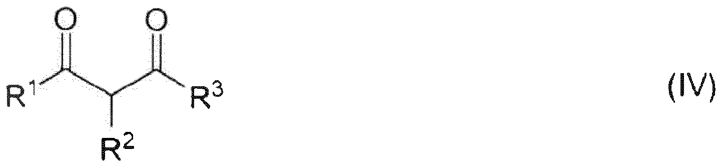

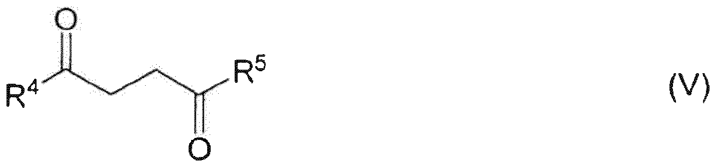

6. Method according to claim 5, **characterised in that** the diketone **K1** is selected from the group consisting of 2,4-pentanedione, 3-methyl-, 3-ethyl-, 3-propyl-, 3-isopropyl-, 3-butyl-, 3-tert-butyl-, 3-cyclohexyl-, and 3-phenyl-2,4-pentanedione, 3,5-heptanedione, 6-methyl-3,5-heptanedione, 2,2,6,6-tetramethyl-3,5-heptanedione, 2,2,4,6,6-pentamethyl-3,5-heptanedione, 2-acetylcyclopentanone, and 2-acetylcyclohexanone, and is preferably 2,4-pentanedione.

7. Method for preparing a polyamine **A1** of the formula (I) according to any of claims 1 to 4, **characterised in that** at least one polyamine **B1** of the formula (III) is reacted with at least one ketone of the formula (IV a), the ketone of the formula (IV a) being used in either stoichiometric or substoichiometric ratio relative to the primary amino groups of the polyamine.

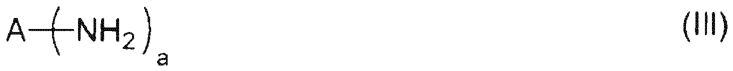

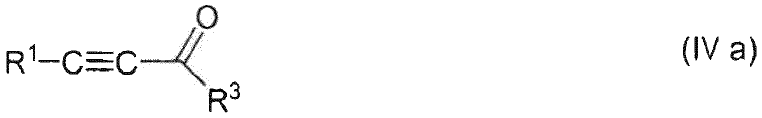

8. Method according to claim 5, 6 or 7, **characterised in that** the polyamine **B1** is selected from the group consisting of tetraethylenepentamine (TEPA), pentaethylenehexamine (PEHA) and polyethylene polyamine with 5 to 7 ethyleneamine units (known as "higher ethylene polyamine", HEPA).

9. Curing agent composition containing
(a) at least one polyamine **A1** of the formula (I) or (II) according to any of claims 1 to 4, and
(b) at least one polyamine **B2** with at least two amino groups that are primary or secondary amino groups.

10. Curing agent composition according to claim 9, **characterised in that** the polyamine **B2** is selected from the group consisting of 1,5-diamino-2-methylpentane (MPMD), 2-butyl-2-ethyl-1,5-pentanediamine (C11-neodiamine), 2,2,4- and 2,4,4-trimethylhexamethylenediamine (TMD), bis(4-amino-3-methylcyclohexyl)methane, 1-amino-3-aminomethyl-3,5,5-trimethylcyclohexane (= isophoronediamine or IPDA), 1,3-bis(aminomethyl)cyclohexane, 3(4),8(9)-bis(aminomethyl)tricyclo[5.2.1.0^{2,6}]decane, 1,3-xylylenediamine, diethylenetriamine (DETA), dipropylenetriamine (DPTA), and an ether group-containing diamine derived from amination of a polyoxyalkylene diol with a molecular weight of from 500 to 5000 g/mol.

11. Two-component epoxy resin composition, comprising a curing agent component **C1** and a resin component **C2**, **characterised in that**: the curing agent component **C1** contains at least one polyamine **A1** of the formula (I) or (II) according to any of claims 1 to 4, which is optionally a curing agent composition according to either claim 9 or claim 10; and **in that** the resin component **C2** contains at least one epoxy resin.

12. Two-component epoxy resin composition according to claim 11, **characterised in that** the composition has less than 5 wt. % benzyl alcohol, and more particularly is free from benzyl alcohol.

13. Cured composition that is obtained by mixing the two components **C1** and **C2** of a two-component epoxy resin composition according to either claim 11 or claim 12.

14. Use of a two-component epoxy resin composition according to either claim 11 or claim 12 as an adhesive, a sealing compound, a casting compound, a coating, a floor covering, a paint, a lacquer, a primer or an undercoat, preferably as a coating, more particularly as a floor coating.

15. Use of a polyamine **A1** according to any of claims 1 to 4, or of a curing agent composition according to either claim 9 or claim 10, for reducing the blushing of an epoxy resin composition.

## Revendications

1. Polyamine **A1** de formule (I) ou (II) : 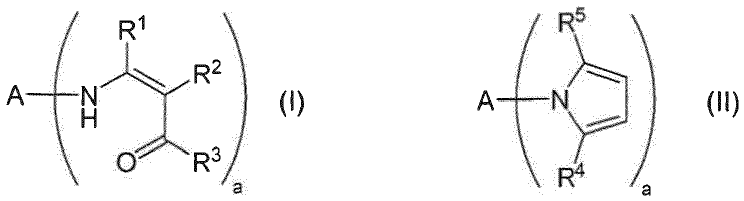 dans lesquelles :
a désigne un nombre entier de 1 à 100 ;
A désigne un résidu de valence a d'une polyamine **B1** après élimination d'un groupement amino primaire, dans lequel ce résidu présente au moins trois groupements amino sous la forme de groupements amino secondaires ou primaires et le nombre de ces groupements amino secondaires est plus grand que le nombre de ces groupements amino primaires ;
ou
R¹ et R³ représentent indépendamment l'un de l'autre, respectivement, un groupement alkyle, cycloalkyle, aryle ou arylalkyle avec 1 à 12 atomes de carbone, qui présentent éventuellement des groupements éther ou des atomes d'halogène, et R² désigne un atome d'hydrogène ou un groupement alkyle, cycloalkyle, aryle ou arylalkyle avec 1 à 12 atomes de carbone,
ou
R² et R¹ représentent, conjointement pour un résidu d'hydrocarbure bivalent, la partie d'un noyau carbocyclique éventuellement substitué avec 5 à 8 atomes de carbone et R³ désigne un groupement alkyle, cycloalkyle, aryle ou arylalkyle avec 1 à 12 atomes de carbone, qui présente éventuellement des groupements éther ou des atomes d'halogène ;
ou
R² et R³ représentent, conjointement pour un résidu d'hydrocarbure bivalent, la partie d'un noyau carbocyclique éventuellement substitué avec 5 à 8 atomes de carbone et R¹ désigne un groupement alkyle, cycloalkyle, aryle ou arylalkyle avec 1 à 12 atomes de carbone, qui présente éventuellement des groupements éther ou des atomes d'halogène ; et
R⁴ et R⁵ représentent indépendamment l'un de l'autre, respectivement, un groupement alkyle, cycloalkyle, aryle ou arylalkyle avec 1 à 12 atomes de carbone, qui présente éventuellement des groupements éther ou des atomes d'halogène.

2. Polyamine **A1** selon la revendication 1, **caractérisée en ce que** l'indice a des formules (I) et (II) désigne une valeur de 2 à 100.

3. Polyamine **A1** selon la revendication 1 ou la revendication 2, **caractérisée en ce que** la polyamine **B1** est choisie dans le groupe constitué de la tétraéthylènepentamine (TEPA), de la pentaéthylènehexamine (PEHA) et de la polyéthylènepolyamine avec 5 à 7 unités éthylène-amine (ce que l'on appelle une « éthylènepolyamine supérieure » (HEPA)).

4. Polyamine **A1** selon l'une quelconque des revendications précédentes, **caractérisée en ce que** R¹ et R³ représentent respectivement un groupement méthyle et/ou R² un atome d'hydrogène.

5. Procédé de fabrication d'une polyamine **A1** de formule (I) ou (II) selon l'une quelconque des revendications 1 à 4, **caractérisé en ce que** l'on fait réagir au moins une polyamine **B1** de formule (III) avec au moins une dicétone **K1** de formule (IV) ou une dicétone **K2** de formule (V), dans lequel la dicétone **K1** ou **K2** est utilisée en mode stoechiométrique ou sous-stoechiométrique par rapport aux groupements amino primaires de la polyamine :

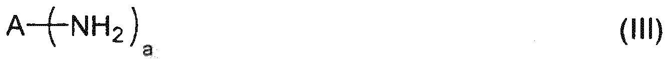

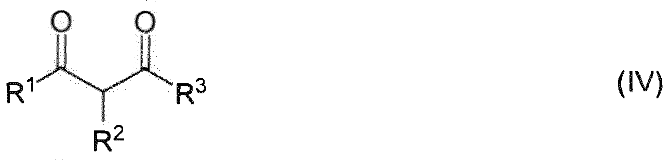

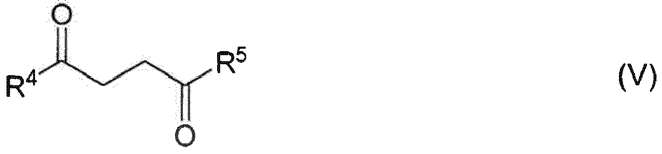

6. Procédé selon la revendication 5, **caractérisé en ce que** la dicétone **K1** est choisie dans le groupe constitué de la 2,4-pentanedione, des 3-méthyl-, 3-éthyl-, 3-propyl-, 3-isopropyl-, 3-butyl-, 3-tert-butyl-, 3-cyclohexyl- et 3-phényl-2,4-pentanedione, de la 3,5-heptanedione, de la 6-méthyl-3,5-heptanedione, de la 2,2,6,6-tétraméthyl-3,5-heptanedione, de la 2,2,4,6,6-pentaméthyl-3,5-heptanedione, de la 2-acétyl-cyclopentanone et de la 2-acétylcyclohexanone, de préférence la 2,4-pentanedione,

7. Procédé de fabrication d'une polyamine A1 de formule (I) selon l'une quelconque des revendications 1 à 4, **caractérisé en ce que** l'on fait réagir au moins une polyamine B1 de formule (III) avec au moins une cétone de formule (IV a), dans lequel la cétone de formule (IV a) est utilisée en mode stoechiométrique ou sous-stoechiométrique par rapport aux groupements amino primaires de la polyamine :

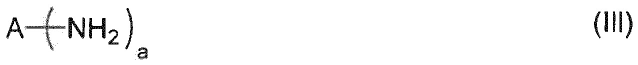

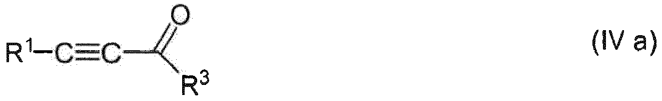

8. Procédé selon la revendication 5 ou 6 ou 7, **caractérisé en ce que** la polyamine **B1** est choisie dans le groupe constitué de la tétraéthylène-pentamine (TEPA), de la pentaéthylènehexamine (PEHA) et de la polyéthylènepolyamine avec 5 à 7 unités éthylènediamine (ce que l'on appelle une « éthylènepolyamine supérieure » (HEPA)).

9. Composition de durcisseur contenant :
(a) au moins une polyamine **A1** de formule (I) ou (II) selon l'une quelconque des revendications 1 à 4,
(b) au moins une polyamine **B2** avec au moins deux groupements amino sous la forme de groupements amino primaires ou secondaires.

10. Composition de durcisseur selon la revendication 9, **caractérisée en ce que** la polyamine **B2** est choisie dans le groupe constitué du 1,5-diamino-2-méthylpentane (MPMD), de la 2-butyl-2-éthyl-1,5-pentanediamine (néodiamine en C11), des 2,2,4- et 2,4,4-triméthylhexaméthylènediamines (TMD), du bis-(4-amino-3-méthylcyclohexyl)méthane, du 1-amino-3-aminométhyl-3,5,5-triméthylcyclohexane (= isophoronediamine ou IPDA), du 1,3-bis-(amino-méthyl)cyclohexane, du 3(4),8(9)-bis-(amino-méthyl)-tricyclo[5.2.1.0^{2,6}]décane, de la 1,3-xylylènediamine, de la diéthylènetriamine (DETA), de la dipropylènetriamine (DPTA) et d'une diamine contenant des groupements éther provenant de l'amination d'un polyoxyalkylènediol d'un poids moléculaire de 500 à 5000 g/mole.

11. Composition de résine époxyde à deux composants constituée d'un composant durcisseur **C1** et d'un composant résine **C2**, **caractérisée en ce que** :
le composant durcisseur **C1** contient au moins une polyamine **A1** de formule (I) ou (II) selon l'une quelconque des revendications 1 à 4, éventuellement sous la forme d'une composition de durcisseur selon la revendication 9 ou 10 ; et
le composant résine **C2** contient au moins une résine époxyde.

12. Composition de résine époxyde à deux composants selon la revendication 11, **caractérisée en ce que** la composition présente moins de 5 % en poids d'alcool benzylique et est en particulier exempte d'alcool benzylique.

13. Composition durcie qui est obtenue par mélange des deux composants **C1** et **C2** d'une composition de résine époxyde à deux composants selon la revendication 11 ou la revendication 12.

14. Utilisation d'une composition de résine époxyde à deux composants selon la revendication 11 ou la revendication 12 comme adhésif, masse de colmatage, masse de scellage, revêtement, revêtement de sol, peinture, laque, couche de fond ou couche de base, de préférence comme revêtement, en particulier comme revêtement de sol.

15. Utilisation d'une polyamine **A1** selon l'une quelconque des revendications 1 à 4 ou d'une composition de durcisseur selon la revendication 9 ou la revendication 10 pour réduire la formation de voile d'une composition de résine époxyde.
